# EUROPÄISCHE PATENTANMELDUNG

(11) **EP 2 792 422 A1**
(43) Veröffentlichungstag der Anmeldung: **22.10.2014**
(21) Anmeldenummer: 13164433.8
(22) Anmeldetag: 19.04.2013
(51) Int. Cl.: B05D 3/06, B05D 7/20, B29C 35/10, C03C 25/12, C03C 25/62, B05D 3/04, B29C 35/08

(54) **Vorrichtung zur Härtung einer auf ein Kabel aufgebrachten Beschichtung**

(71) Anmelder: Farbwerke Herkula S.A., 4780 St. Vith (BE)
(72) Erfinder: Zapf, Frederic, Dr.rer.nat., 54595 Prüm (DE); Kamps, Sebastian, Dr.-Ing., 54608 Bleialf (DE)
(74) Vertreter: Jostarndt, Hans-Dieter

(57) **Zusammenfassung**

Die Erfindung betrifft eine Vorrichtung zur Härtung einer auf ein Kabel (1) aufgebrachten Beschichtung, wobei die Beschichtung mindestens einen Fotoinitiator aufweist, aufweisend eine Vielzahl von UV-LEDs oder UV-LED-Packungen (2), deren emittierte Strahlung mindestens eine Wellenlänge im Bereich des Absorptionsspektrums des Fotoinitiators aufweist, wobei die UV-LEDs oder UV-LED-Packungen (2) radial so um die Längsachse eines innerhalb der Vorrichtung anordbaren Kabels (1) angeordnet sind, dass die Austrittsöffnungen der UV-LEDs radial in Richtung des Kabels (1) weisen, so dass die von den UV-LEDs emittierte Strahlung auf direktem Strahlwege auf das Kabel Wellenleiter (1) trifft.

## Beschreibung

Die Erfindung betrifft eine Vorrichtung zur Härtung einer auf ein Kabel aufgebrachten Beschichtung, wobei die Beschichtung mindestens einen Fotoinitiator aufweist, aufweisend eine Vielzahl von UV-LEDs oder UV-LED-Packungen, deren emittierte Strahlung mindestens eine Wellenlänge im Bereich des Absorptionsspektrums des Fotoinitiators aufweist. Der Begriff UV-LED-Packung soll dabei als Anordnung aus einer Vielzahl von UV-LEDs verstanden werden. Ähnlich wie bei integrierten Schaltkreisen (IC) oder Mikroprozessoren sind hunderte bis tausende einzelner LED-Chips flächig zu einer UV-LED-Packung auf einer Platte angeordnet.

Vorrichtungen dieser Art sind aus dem Stand der Technik bereits bekannt. Dabei können im Sinne der Erfindung unter dem Begriff Kabel sowohl Drähte, elektrische Kabel, Lichtwellenleiter (LWL-Kabel) und optische Wellenleiter als auch andere Produkte verstanden werden, die eine gegenüber ihrem Durchmesser sehr große Länge aufweisen. Der Begriff Beschichtung bezeichnet dabei sowohl eine flächige Beschichtung als auch eine Ringsignierung oder Bandsignierung. Ebenfalls kann die Beschichtung auch eine Beschriftung (Bedruckung) sein.

Beispielsweise offenbart die deutsche Offenlegungsschrift DE 19631908 A1 ein Verfahren und eine Einrichtung zur Umhüllung eines optischen Wellenleiters mit einem Harz. Das Harz weist dabei einen Fotoinitiator auf, welcher die Aushärtung mittels optischer Strahlung, insbesondere UV-Licht ermöglicht. Die für den Aushärtevorgang aufgebrachte Strahlung wird dabei so ausgewählt, dass deren Wellenlänge bevorzugt in demjenigen Wellenbereich liegt, in welchem das Absorptionsmaximum des Fotoinitiators des Harzes liegt. Durch die selektive Auswahl der Strahlung, deren Wellenlänge weitestgehend auf das Absorptionsmaximum des Fotoinitiators abgestellt ist, wird der größte Teil der Strahlungsenergie praktisch allein für den Härtungsvorgang verwendet. Somit wird der optische Leiter vor schädigender Wärmestrahlung geschützt.

Als Strahlungsquellen werden sogenannte Excimer-Lampen verwendet, die besonders energiereich sind und aufgrund ihres speziellen Wirkprinzipes die Erzeugung und Emission definierter, monochromatischer Wellenlängen ermöglichen. Der Härtungsvorgang kann sowohl bei der Herstellung der Faser selbst, d.h. dem Faserziehen, eingesetzt werden, als auch bei einer nachträglichen Beschichtung, z.B. einem Farbauftrag auf einen fertigen Lichtwellenleiter. Als Strahlungsquelle schlägt die Vorveröffentlichung eine Excimer-Strahlungsquelle vor, wobei der optische Wellenleiter die Strahlungsquelle zentrisch durchläuft, so dass die Strahlung radial von allen Seiten auf den Wellenleiter einwirkt. Die Strahlungsquelle ist dafür ringförmig ausgestaltet, so dass sie rund um den Leiter die gewünschte Strahlung und damit eine effektive Aushärtung des Bescllichtungsmaterials ermöglicht.

Die Druckschrift EP 2 388 239 A1 betrifft eine UV-LED-Vorrichtung, die dazu dient, eine Aushärtung einer auf eine Glasfaser aufgebrachten Beschichtung zu bewirken. Die Vorrichtung verfügt über eine oder mehrere UV-LEDs, die zum Zwecke der Aushärtung elektromagnetische Strahlung abgeben. Die gezeigte Vorrichtung verfügt über ein Gehäuse, das elliptisch ausgebildet ist und der Strahlungsreflektion dient. Sowohl die Faser als auch die UV-LED-Quelle ist dabei innerhalb des Gehäuses angeordnet. Die Bestrahlung der Faser erfolgt dabei indirekt über die von der inneren Gehäusewand reflektierte Strahlung der UV-LED.

Obwohl die vorgenannten Vorrichtungen und Verfahren durchaus brauchbare Ansätze bieten, weisen sie dennoch Nachteile auf. Die zuvor genannten Excimer-Lampen weisen den Nachteil auf, dass sie aufgrund der Zündung des in ihnen vorhandenen Gases, beispielsweise Xenon-Halogen-Gemisch, eine gewisse Vorlauf- und auch eine gewisse Nachlaufzeit benötigen, was insgesamt die für die Produktion erforderliche Zeit erhöht. Darüber hinaus ergibt sich bei den Excimer-Lampen eine begrenzte Lebensdauer sowie ein Leistungsverlust im Laufe derselben. Da gemäß der zuerst angegebenen Vorveröffentlichung nur eine einzige Excimer-Lampe verwendet wird, legt ein Ausfall derselben zudem den gesamten Aushärtungsprozess lahm.

Die aus dem zuvor genannten Stand der Technik bekannten UV-LEDs werden stets in Verbindung mit Reflektoren eingesetzt, die das von den UV-LEDs emittierte Licht über die Reflektionsfläche, beispielsweise eine Gehäusefläche, auf den Wellenleiter leiten. Eine vollständige Abdeckung der auszuhärtenden Substratbeschichtung kann durch die Reflektoren jedoch nicht stattfinden. Darüber hinaus haben Reflektoren den Nachteil, dass sie von Zeit zu Zeit gereinigt werden müssen, dass sie defektbedingt ausfallen können und dass sie nachjustiert werden müssen, da sie sich im Laufe der Zeit dejustieren. Ebenso weisen die Reflektoren stets eine gewisse Ausdehnung auf, so dass es nicht möglich ist, die UV-LEDs möglichst nahe an das zu bestrahlende Objekt heranzurücken.

Es ist daher Aufgabe der vorliegenden Erfindung, eine Vorrichtung zur Härtung einer auf ein Kabel aufgebrachten Beschichtung, Bedruckung oder Ringsignierung zu schaffen, welche die vorgenannten Nachteile nicht aufweist, insbesondere wartungsarm ist und somit eine möglichst schnelle und ausfallfreie Produktion ermöglicht.

Zur Lösung der vorgenannten Aufgabe schlägt die Erfindung vor, dass die UV-LEDs oder UV-LED-Packungen radial so um die Längsachse eines innerhalb der Vorrichtung anordbaren Kabels angeordnet sind, dass die Austrittsöffnungen der UV-LEDs radial in Richtung des Kabels weisen, so dass die von den UV-LEDs emittierte Strahlung auf direktem Strahlwege auf das Kabel trifft.

Gemäß dieser Anordnung wird es möglich, das Kabel direkt und homogen mit UV-Licht zu bestrahlen, so dass die auf das Kabel aufgebrachte Beschichtung, Bedruckung oder Ringsignierung gleichmäßig ausgehärtet werden kann. Die erfindungsgemäße Anordnung kann als zentro-symmetrische Anordnung bezeichnet werden. Die einzelnen LEDs oder LED-Packungen sind dabei quasi kreisförmig als Vieleck um das zu bestrahlende Produkt, nämlich das Kabel, angeordnet. Das Kabel befindet sich im Fokus sämtlicher symmetrisch angeordneter LEDs, wodurch eine gleichmäßige Aushärtung der Beschichtung erreicht werden kann. Da die erfindungsgemäße Vorrichtung zudem ohne Reflektoren auskommt, können die einzelnen UV-LEDs näher an das zu bestrahlende Kabel herangeführt werden.

Für die Ausgestaltung der erfindungsgemäßen Vorrichtung ist die Dreiecksanordnung die einfachste Ausführungsform. Dabei umgeben drei sich in den Kantenbereichen berührende UV-LED-Packungen das beschichtete Kabel. Die Anzahl der verwendeten LEDs ist dabei grundsätzlich nicht beschränkt. Je mehr LED-Packungen für das Dreieck verwendet werden, desto mehr nähert sich die (Polygon-) Form an einen Kreis an. Jedoch entfernen sich die LEDs mit steigender Anzahl auch von dem Kabel, welches im Zentrum angeordnet ist. Als ideal wird eine Anzahl zwischen 3 und 12 LED-Packungen angenommen. Dabei ergibt sich ein gutes Verhältnis zwischen der Größe der LEDs, dem Durchmesser des Kabels und dem Abstand der LEDs zu dem Kabel.

Aufgrund der besonders einfachen Ausgestaltung der erfindungsgemäßen Vorrichtung entfallen die im Stand der Technik verwendeten Reflektoren. Dadurch können die LEDs besonders nah an das Kabel herangeführt werden, wodurch gleichzeitig auch die Anzahl der benötigten LED-Packungen reduziert wird. Dies spart wiederum Kosten, zudem ergibt sich durch den geringen Abstand zwischen LEDs und Kabel eine nahezu verlustfreie und homogene Bestrahlung der auszuhärtenden Beschichtung sowie ein insgesamt schnellerer Aushärtungsprozess.

Die Verwendung von UV-LEDs weist zudem den Vorteil auf, dass diese monochromatische Strahlung emittieren, so dass die Emission von Wärmestrahlung verhindert wird. Somit können beliebig viele UV-LEDs eingesetzt werden, ohne dass dadurch die Wärmestrahlung erhöht wird. Eine Schädigung des Kabels, beispielsweise einer empfindlichen Faser, wird somit zuverlässig verhindert. LEDs besitzen zudem den Vorteil, dass sie keine Vorlauf- und/oder Nachlaufzeiten benötigen, so dass insgesamt eine schnellere Härtung der Beschichtung möglich ist. Auch weisen LEDs eine etwa zehnmal höhere Lebensdauer auf als UV-Lampen, so dass Wartungsarbeiten an der erfindungsgemäßen Vorrichtung minimiert werden können. Ein Leistungsverlust während der Lebensdauer tritt ebenfalls nicht auf. Auch beeinträchtigt der Ausfall lediglich einzelner LEDs innerhalb der Vorrichtung nicht die Härtung der Beschichtung. Weitere Vorteile sind die Quecksilberfreiheit und das Nichtentstehen von giftigem Ozongas.

Da die UV-LEDs grundsätzlich monochromatisches Licht abgeben, kann der Fotoinitiator der Beschichtung auf den jeweils zum Einsatz kommenden LED-Typ abgestimmt werden. Somit kann insgesamt die Zusammensetzung der Beschichtung vereinfacht werden, so dass insgesamt eine Kostenreduzierung dadurch erreicht werden kann, dass nicht für sämtliche Lichtwellenlängen entsprechende Fotoinitiatoren vorzusehen sind. Sofern jedoch innerhalb der erfindungsgemäßen Vorrichtung unterschiedliche UV-LED-Typen zum Einsatz kommen sollen, die mehr als eine UV-Wellenlänge abstrahlen, kann die auf das Kabel aufgebrachte Beschichtung eine Mehrzahl von Fotoinitiatoren aufweisen, so dass im Wesentlichen für jede Wellenlänge ein Fotoinitiator mit dazu korrespondierendem Absorptionsmaximum vorgesehen ist.

Die Erfindung sieht weiterhin vor, dass die UV-LEDs auf einer flexiblen Folie angeordnet sind. Dadurch können die UV-LEDs auf besonders einfache Weise innerhalb einer zylinderförmigen Gestalt angeordnet werden, so dass sie das Kabel gleichmäßig umgeben und bestrahlen. Durch die flexible Folie sind dabei nicht nur kreisförmige Anordnungen besonders einfach möglich, sondern darüber hinaus auch polygonartige Anordnungen, die eine Fokussierung der Strahlen der verschiedenen UV-LEDs im Bereich der Längsachse des Kabels ermöglichen. Die flexible Folie schafft dabei darüber hinaus auch eine geschlossene Umhausung der UV-LED-Anordnung und des Kabels, so dass zusätzlich ein Schutz vor dem Eindringen von Staub, Feuchtigkeit usw. geschaffen wird. Zudem kann in das röhrenförmige Gebilde, wenn nötig, Schutzgas wie Stickstoff, Edelgas oder Kohlendioxid eingeleitet werden.

Es ist weiterhin vorgesehen, dass die UV-LEDs bzw. UV-LED-Packungen in einem Abstand von wenigen Millimetern zu dem Kabel anordbar sind. Hierdurch lässt sich insgesamt der für die Vorrichtung benötigte Raum reduzieren, so dass auch eine Vielzahl von erfindungsgemäßen Vorrichtungen platzsparend benachbart zueinander angeordnet werden kann.

Es ist insbesondere vorgesehen, dass die UV-LEDs einen Tunnel bilden, durch welchen hindurch das Kabel konzentrisch führbar ist. Dabei kann der Tunnel insbesondere, zum leichten Einbringen des Kabels in die Produktionslinie, die Form von zwei Zylinderhälften oder zwei Ellipsoidhälften haben, wobei eine der Hälften klappbar ausgebildet ist. Der Öffnungswinkel kann beispielsweise 90° bis 180° betragen. Mittels dieses Tunnels wird eine Aushärtungs-Strecke gebildet, in welcher die auf das Kabel aufgebrachte Beschichtung, Bedruckung oder Ringsignierung kontinuierlich gehärtet werden kann, so dass das Kabel beispielsweise besonders einfach von einer Spule abgewickelt wird, mit der Beschichtung, Bedruckung oder Ringsignierung versehen wird und anschließend durch den von den UV-LEDs gebildeten Tunnel dem Härtungsvorgang zugeführt wird, wobei anschließend ebenfalls ein Aufwickeln des fertigbeschichteten Kabels auf eine Spule erfolgen kann.

Besonders vorteilhaft ist innerhalb des durch die UV-LEDs gebildeten Tunnels konzentrisch ein Schutzrohr angeordnet. Dieses Schutzrohr ist vorteilhaft ein Quarzglasrohr, welches UV-Strahlung gar nicht oder nur in äußerst geringem Maße absorbiert. Dieses Schutzrohr dient dabei dem Schutz der LEDs vor Verschmutzung durch zu Beginn des Tunnels noch nicht ausgehärtete Beschichtung. Diese noch nicht ausgehärtete Beschichtung kann ohne das erfindungsgemäße Schutzrohr auf die LEDs abtropfen. Das Schutzrohr wird in diesem Fall zwar ebenfalls mit noch nicht ausgehärteter Beschichtung betropft, jedoch lässt sich dieses wesentlich einfacher austauschen und reinigen. Das Schutzrohr kann so ausgebildet sein, dass es die Form von zwei Zylinderhälften/Ellipsoidhälften aufweist, von welchen eine Hälfte verschwenkbar ist.

Es ist weiterhin vorgesehen, dass das durch das Schutzrohr begrenzte Volumen ein Schutzgas, insbesondere Stickstoff, Argon oder Kohlendioxid, aufweist. Das Schutzgas dient der Verdrängung von Sauerstoff im Bereich der Oberfläche des Kabels, wodurch der Aushärtevorgang verbessert und insbesondere beschleunigt werden kann. Es kommen bevorzugter Weise inerte Gase zum Einsatz, wie beispielsweise Stickstoff, Argon oder CO₂.

Weiterhin kann das zwischen Schutzrohr und Tunnel ausgebildete Volumen ein Kühlmedium, insbesondere Wasser, aufweisen. Der zwischen der Außenwandung des Schutzrohres und den LEDs geschaffene Ringbereich wird somit dazu genutzt, die LEDs zu kühlen, so dass diese zum einen stets eine gleichmäßige Lichtleistung abgeben, was wiederum zu einer gleichmäßigen Aushärtung der Beschichtung führt, und zum anderen die Lebensdauer der LEDs verlängert wird.

Schließlich ist vorgesehen, dass der Tunnel in Längsrichtung des Kabels abschnittweise verschiedene UV-LEDs aufweist, die Strahlungen mit voneinander verschiedenen Wellenlängen emittieren. Sofern eine Beschichtung also unterschiedliche oder wechselnde Fotoinitiatoren oder einen Fotoinitiator mit unbekannten Absorptionseigenschaften aufweist, kann ein LED-Tunnel geschaffen werden, der aus einzelnen Sektoren besteht, die jeweils eine bestimmte LED-Sorte aufweisen. Im Ergebnis ergibt sich so ein Lichttunnel, der abschnittsweise Licht mit unterschiedlichen Wellenlängen abgibt. Ein Kabel, das durch diesen Tunnel hindurchgezogen wird, wird in einem ersten Sektor mit Strahlung einer ersten Wellenlänge bestrahlt, so dass der dazu korrespondierende Fotoinitiator aktiviert wird, woraufhin in einem zweiten Sektor des Tunnels ein anderer, zweiter Fotoinitiator durch eine zweite Wellenlänge aktiviert wird. Somit ist es ebenfalls möglich, einen Lichttunnel auszubilden, welcher die Aushärtung von unterschiedlichen Beschichtungen ermöglicht. Unabhängig von den in der Beschichtung vorhandenen Fotoinitiatoren kann somit zuverlässig eine Aushärtung der Beschichtung sichergestellt werden.

Neben der zuvor erläuterten Vorrichtung zur Härtung einer auf ein Kabel aufgebrachten Beschichtung sieht die Erfindung ebenso die Verwendung dieser Vorrichtung für die Härtung einer Beschichtung vor, welche mindestens einen Fotoinitiator enthält, dessen Absorptionsspektrum mindestens eine Wellenlänge der emittierten Strahlung der UV-LEDs umfasst.

Ebenso stellt die Erfindung ein Set (System) bestehend aus einer mindestens einen Fotoinitiator aufweisenden Beschichtung und einer zuvor dargestellten Vorrichtung unter Schutz, wobei die von der Vorrichtung emittierte Strahlung mindestens eine Wellenlänge im Bereich des Absorptionsspektrums des Fotoinitiators aufweist.

Im Folgenden wird die Erfindung anhand eines Ausführungsbeispiels mit einem optischen Wellenleiter näher erläutert. Dabei zeigen:
- Fig. 1: eine erste Ausgestaltung einer erfindungsgemäßen Vorrichtung,
- Fig. 2: eine zweite Ausgestaltung einer erfindungsgemäßen Vorrichtung,
- Fig. 3: eine dritte Ausgestaltung einer erfindungsgemäßen Vorrichtung;
- Fig. 4: eine vierte Ausgestaltung einer erfindungsgemäßen Vorrichtung;
- Fig. 5: ein Gehäuse der Vorrichtung nach Fig. 4 in aufgeklapptem Zustand.

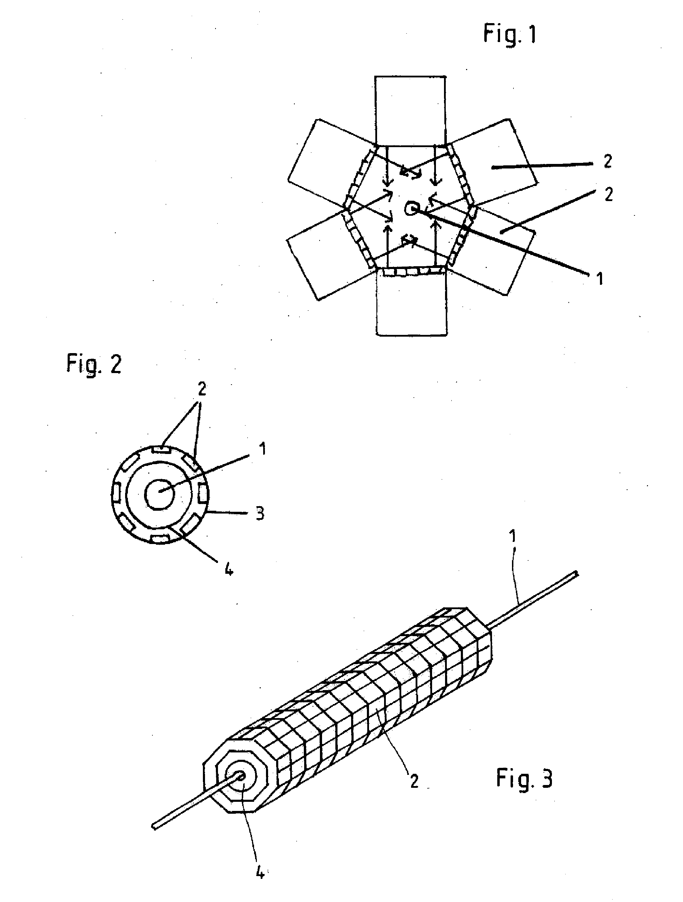

Die Vorrichtung gemäß Fig. 1 weist insgesamt sechs UV-LED-Packungen 2 auf, welche polygonartig um einen optischen Wellenleiter 1 angeordnet sind. Die Strahlungen (mit Pfeilen angedeutet) der einzelnen UV-LED-Packungen 2 treffen sich dabei zentral im Bereich des optischen Wellenleiters 1.

Die Ausführungsform gemäß Fig. 2 zeigt eine Vorrichtung mit insgesamt acht UV-LED-Packungen 2, welche auf einer Folie 3 kreisförmig so um eine Faser 1 angeordnet sind, dass die Faser im Wesentlichen genau auf der Achse des durch die UV-LED-Packungen gebildeten Zylinders verläuft. Zwischen dem durch die UV-LED-Packungen 2 gebildeten Tunnel und dem optischen Wellenleiter 1 ist ein Schutzrohr 4 angeordnet.

Die erfindungsgemäßen Vorrichtungen werden für die Härtung einer auf einem optischen Wellenleiter aufgebrachten Beschichtung wie folgt eingesetzt:

Zuerst wird ein optischer Wellenleiter 1 in eine Beschichtung getaucht oder mit einer Beschichtung besprüht. Die Beschichtung kann dabei eine UV-Tintenzusammensetzung sein, welche einen oder auch mehrere unterschiedliche Fotoinitiatoren beinhaltet. Vorteilhaft wird der optische Wellenleiter 1 dabei für den Beschichtungsvorgang kontinuierlich von einer Spule abgewickelt und dem Beschichtungsvorgang zugeführt, wobei nach dem Beschichtungsvorgang vorteilhaft ein Abstreifen überschüssiger Beschichtung stattfindet. Anschließend wird der optische Wellenleiter 1 in eine der Vorrichtungen nach Fig. 1 oder 2 eingeführt. Im Falle der Beschriftung von Kabeln werden rotierende Tiefdruckscheiben verwendet. Im Falle der Ringsignierung werden entsprechende Signiergeräte verwendet. Nach dem Auftrag erfolgt die Härtung (Trocknung) der Farben und Lacke durch UV-Licht.

Der optische Wellenleiter 1 wird dabei zentral zwischen den UV-LED-Packungen 2 hindurchgeführt, so dass der optische Wellenleiter 1 zu jeder UV-LED-Packung 2 im Wesentlichen einen gleichen Abstand aufweist. Für den Härtungsvorgang wird der optische Wellenleiter 1 mit der darauf aufgebrachten Beschichtung mit der von den UV-LED-Packungen 2 emittierten Strahlung bestrahlt. Die UV-LED-Packungen 2 emittieren Strahlung einer (oder auch mehrerer) Wellenlängen. Der zu der jeweiligen Strahlungswellenlänge korrespondierende Fotoinitiator absorbiert den jeweiligen Strahlungsanteil und initiiert dabei die Aushärtung der Beschichtung. Durch die Anordnung der UV-LED-Packungen 2 in der Art, dass deren Austrittsöffnungen in Richtung des Wellenleiters 1 weisen, wird der Wellenleiter 1 verlustfrei und direkt bestrahlt, so dass sich eine besonders schnelle und homogene Härtung der Beschichtung ergibt. Während des Härtungsvorgangs wird der Wellenleiter 1 kontinuierlich durch den von den UV-LED-Packungen 2 gebildeten Tunnel hindurchgezogen und anschließend vorteilhaft auf eine Spule ausgewickelt. Das fertige Produkt ist anschließend einsatzbereit. Das gleiche Verfahren wird analog bei der Beschriftung oder Ringsignierung von Kabeln, Leitungen oder Lichtwellenleitern für Lichtsignale oder Strom verwendet.

In dem Ausführungsbeispiel gemäß Fig. 2 ist zwischen dem durch die UV-LED-Packungen 2 gebildeten Tunnel und dem Wellenleiter 1 ein Schutzrohr 4 ausgebildet, welches ein Quarzglasrohr ist. Da Quarzglas je nach Zusammensetzung UV-Licht nicht absorbiert oder höchstens zu einem äußerst geringen Anteil, kann das UV-Licht verlustfrei den optischen Wellenleiter 1 bestrahlen. Zwischen dem Wellenleiter 1 und dem Schutzrohr 4 wird ein Schutzgas, insbesondere Stickstoff, Argon oder Kohlendioxid, eingeleitet, welches dort vorhandenen Sauerstoff verdrängt und somit den Aushärteprozess fördert. Zusätzlich wird zwischen dem Schutzrohr 4 und dem durch die UV-LEDs gebildeten Tunnel ein Kühlmedium eingeleitet. Das Kühlmedium, welches vorzugsweise Wasser ist, sorgt für eine permanente und gleichmäßige Kühlung der UV-LED-Packungen 2, so dass insgesamt deren Lichtstärke über die Einsatzdauer konstant bleibt. Zudem erhöht sich dadurch insgesamt die Lebensdauer der UV-LED-Packungen. Diese Ausführungsform kann analog auch für die Beschriftung, Beschichtung und Ringsignierung von Kabeln, Leitungen und Adern verwendet werden.

Fig. 3 zeigt ein weiteres Ausführungsbeispiel einer Härtungsvorrichtung. Diese weist eine Vielzahl von UV-LED-Packungen 2 auf, die in Form einer Röhre mit acht Begrenzungsflächen angeordnet sind. Jede UV-LED-Packung 2 besteht wiederum aus einer Vielzahl einzelner UV-LEDs, die als Array angeordnet sind. Zentral zwischen den UV-LED-Packungen 2 befindet sich ein Wellenleiter 1.

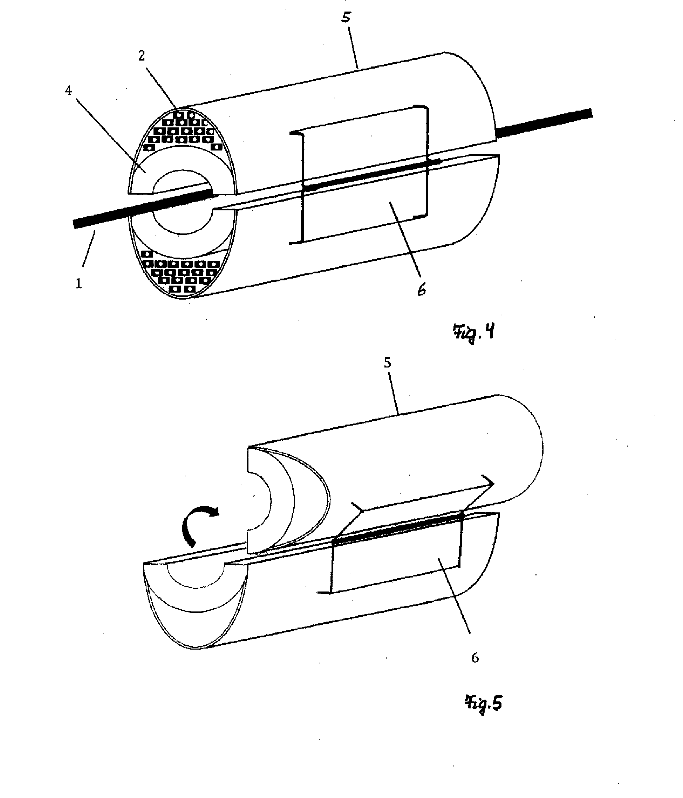

Die Figuren 4 bzw. 5 zeigen ein Gehäuse 5, welches in besonders einfacher Art und Weise UV-LED-Packungen 2 und ein Schutzrohr 4 aufweist. Das Gehäuse 5 weist eine zylinderförmige Gestalt auf. In seinem Inneren ist das Schutzrohr 4 angeordnet, durch welches das zu beschichtende Kabel 1, d.h. beispielsweise ein Wellenleiter, geführt wird. Zwischen dem äußeren Mantel des Gehäuses 5 und dem Schutzrohr 4 sind UV-LED-Packungen 2 um das Schutzrohr angeordnet. Das Gehäuse 5 besteht zudem aus zwei Zylinderhälften, welche mittels einer Klappvorrichtung 6 gegeneinander verschwenkbar sind. In einer Ausführungsform kann dabei beispielsweise eine Zylinderhälfte unbeweglich montiert sein, während die zweite Zylinderhälfte um 90° bis 180° verschwenkbar ist. Im gezeigten Fall der beiden Zylinderhälften handelt es sich um eine Ausgestaltung des Gehäuses 5 aus lediglich zwei Umfangsteilflächen. Alternativ ist es jedoch auch möglich, dass der Zylinder mehr als zwei Umfangsteilflächen aufweist, so dass beispielsweise bei drei Umfangsteilflächen jede Umfangsteilfläche einen Winkelbereich von 120° umschreibt. Die klappbar ausgebildete Umfangsteilfläche oder die klappbar ausgebildeten Umfangsteilflächen ermöglichen ein leichtes Einbringen der Kabel in die Produktionsanlage. Der Beschichtungs- und Härtungsvorgang erfolgt wie vorstehend erläutert.

Insgesamt wird somit durch die Erfindung eine besonders platzsparende und kostengünstige Vorrichtung zur Härtung einer auf einen optischen Wellenleiter 1 aufgebrachten Beschichtung geschaffen. Dabei wird der optische Wellenleiter 1 direkt, d.h. ohne den Umweg über Reflektoren, mit der Strahlung der UV-LED-Packungen 2 bestrahlt. Dadurch entfallen im Stand der Technik vorhandene Probleme durch Verschmutzungen der Reflektoren, Dejustagen der Reflektoren und ein erhöhtes Baumaß. Alle dargestellten Ausführunsformen können analog auch für die Beschriftung, Beschichtung und Ringsignierung von Kabeln, Leitungen und Adern verwendet werden.

### Bezugszeichenliste

| | |
|---|---|
| 1 | Kabel |
| 2 | UV-LED-Packungen |
| 3 | Folie |
| 4 | Schutzrohr |
| 5 | Gehäuse |
| 6 | Klappvorrichtung |

## Patentansprüche

1. Vorrichtung zur Härtung einer auf ein Kabel (1) aufgebrachten Beschichtung, wobei die Beschichtung mindestens einen Fotoinitiator aufweist, aufweisend eine Vielzahl von UV-LEDs oder UV-LED-Packungen (2), deren emittierte Strahlung mindestens eine Wellenlänge im Bereich des Absorptionsspektrums des Fotoinitiators aufweist, **dadurch gekennzeichnet, dass** die UV-LEDs oder UV-LED-Packungen (2) radial so um die Längsachse eines innerhalb der Vorrichtung anordbaren Kabels (1) angeordnet sind, dass die Austrittsöffnungen der UV-LEDs radial in Richtung des Kabels (1) weisen, so dass die von den UV-LEDs emittierte Strahlung auf direktem Strahlwege auf das Kabel (1) trifft.

2. Vorrichtung nach Anspruch 1, **dadurch gekennzeichnet, dass** die UV-LEDs oder UV-LED-Packungen (2) auf einer flexiblen Folie (3) angeordnet sind.

3. Vorrichtung nach Anspruch 1 oder 2, **dadurch gekennzeichnet, dass** die UV-LEDs in einem Abstand von wenigen Millimetern zu dem Kabel (1) anordbar sind.

4. Vorrichtung nach einem der vorhergehenden Ansprüche, **dadurch gekennzeichnet, dass** die UV-LEDs oder UV-LED-Packungen (2) einen Tunnel bilden, durch welchen hindurch das Kabel (1) konzentrisch führbar ist.

5. Vorrichtung nach Anspruch 4, **dadurch gekennzeichnet, dass** innerhalb des Tunnels konzentrisch ein Schutzrohr (4), insbesondere ein Quarzglasrohr, angeordnet ist.

6. Vorrichtung nach Anspruch 5, **dadurch gekennzeichnet, dass** das durch das Schutzrohr (4) begrenzte Volumen ein Schutzgas, insbesondere Stickstoff, Argon oder Kohlendioxid, aufweist.

7. Vorrichtung nach einem der Ansprüche 5 oder 6, **dadurch gekennzeichnet, dass** das zwischen Schutzrohr (4) und Tunnel ausgebildete Volumen ein Kühlmedium, insbesondere Wasser, aufweist.

8. Vorrichtung nach einem der Ansprüche 4 bis 7, **dadurch gekennzeichnet, dass** der Tunnel in Längsrichtung des Kabels (1) abschnittweise verschiedene UV-LEDs oder UV-LED-Packungen (2) aufweist, die Strahlungen mit voneinander verschiedenen Wellenlängen emittieren.

9. Vorrichtung nach einem der Ansprüche 1 bis 8, **gekennzeichnet durch** ein zylinderförmiges Gehäuse, innerhalb dessen die UV-LEDs oder UV-LED-Packungen (2) radial um die Längsachse angeordnet sind, wobei das Gehäuse zwei oder mehr Umfangsteilflächen aufweist, von welchen zumindest eine verschwenkbar ausgebildet ist.

10. Verwendung einer Vorrichtung gemäß einem der Ansprüche 1 bis 9 für die Härtung einer auf einem Kabel (1) aufgebrachten Beschichtung, welche mindestens einen Fotoinitiator enthält, dessen Absorptionsspektrum mindestens eine Wellenlänge der emittierten Strahlung der UV-LEDs umfasst.

11. Set bestehend aus einer mindestens einen Fotoinitiator aufweisenden Beschichtung und einer Vorrichtung gemäß einem der Ansprüche 1 bis 9, wobei die von der Vorrichtung emittierte Strahlung mindestens eine Wellenlänge im Bereich des Absorptionsspektrums des Fotoinitiators aufweist.
